# EUROPEAN PATENT SPECIFICATION

(11) **EP 4 089 608 B1**
(45) Date of publication and mention of the grant of the patent: **02.07.2025**
(21) Application number: 22161304.5
(22) Date of filing: 10.03.2022
(51) Int. Cl.: G06Q 20/32, G07F 19/00, G06F 21/35, G06Q 20/10, G06Q 20/18, G06Q 20/42, G06F 21/36

(54) **TOUCHLESS TRANSACTION METHOD**
BERÜHRUNGSLOSES TRANSAKTIONSVERFAHREN
PROCÉDÉ DE TRANSACTION SANS CONTACT

(30) Priority: 10.05.2021 JP 2021079924
(43) Date of publication of application: 16.11.2022
(73) Proprietor: Hitachi Channel Solutions, Corp., Tokyo 141-8576 (JP)
(72) Inventor: HATANAKA, Yumi, Japan, 141-8576 (JP); SUGIHARA, Ikumi, Japan, 141-8576 (JP)
(74) Representative: MERH-IP Matias Erny Reichl Hoffmann Patentanwälte PartG mbB

(56) References cited:
- JP-A- 2005 115 860
- US-A1- 2013 124 411
- US-A1- 2018 285 843
- US-A1- 2020 169 583

## Description

### BACKGROUND

The present invention relates to a touchless transaction method, a touchless transaction system, a transaction management apparatus, and an automatic transaction apparatus.

When a user causes an automatic transaction apparatus such as an ATM (Automatic Teller Machine) to execute various transaction processing such as the transfer of cash money, he/she is needed to input various information (hereinafter called processing information) such as a password of a user's own account, a branch name or an account number of a transfer destination, and a transaction amount by himself/herself.

The input of processing information is generally performed on a touch-panel-type display screen of an automatic transaction apparatus, but its input operation relatively takes a long time, and it takes a long time to perform multiple transfer operations at one time. In such a case, one user occupies an automatic transaction apparatus for a long time, and therefore other users have to wait for their turns in a line for a long time. In order to avoid this situation, technologies to reduce a time needed to input processing information to automatic transaction apparatuses have been proposed.

Japanese Patent Application Laid-open No. 2008-134733 discloses a method for reducing laborious efforts or a time needed to operate an automatic transaction apparatus. This official gazette describes "a financial processing information management system, a financial processing information management method, and a mobile terminal and an automatic teller machine constituting a financial processing information management system that enable a user to efficiently and promptly execute, while assuring excellent security, various transaction processing between an automatic teller machine and a mobile terminal of the user even in an environment in which the mobile terminal is not easily connected to a general communication network, or the like." Furthermore, US 2013 124 411 A1 discloses a method for an automated transaction with an ATM comprising the steps of: interacting, at the server, with a customer to define a transaction to perform at a subsequent ATM during an out-of-band transaction between the customer and the ATM, staging, at the server, the transaction along with a customer identifier for the customer, sending, from the server, a financial transaction identifier to a mobile app of a mobile device of the customer for use when at the ATM in performing the staged transaction, and setting, at the server, policy restrictions for when an unprocessed staged transaction is to be removed and declared invalid. US 2018 285 843 A1 discloses an electronic system and method for reserving cash in ATMs before withdrawing, wherein a request is transmitted to reserve the cash amount in the selected ATM for a predefined time period, wherein the reserved cash amount is withdrawable from the selected ATM in response to user input of the authentication data at the selected ATM within the predefined time period. Eventually, JP 2005 115 860 A discloses a withdrawal/deposit system using an ATM, wherein a cash withdrawal function unit includes a database having at least information for authenticating the user terminal, and a database in which a user associated with the user terminal has at least the reserved withdrawal or deposit information.

US 2020/169583 A1 discloses methods and systems for secure communication over an unsecure communication channel, including a server, to send at least one access token to a computerized device over a secured communication channel, and a terminal, to receive from the computerized device, over an unsecure communication channel, at least a second token, where said second token is based on the access token received from the server.

### SUMMARY

In the technology of Japanese Patent Application Laid-open No. 2008-134733, a user is caused to input only a part of transaction information with a mobile terminal and therefore operates a touch panel of an automatic transaction apparatus fewer times. Nevertheless, the user has to touch an ATM at least once to execute an operation, and a complete touchless operation is not realized.

Although the number of user's operation times is reduced, a user has to operate an ATM at least once. Therefore, there is room for an improvement in reducing a transaction time. Moreover, since an automatic transaction apparatus is operated by an unspecified number of users, there is a possibility that virus is attached to user's fingers when a user operates a touch panel of the automatic transaction apparatus or the like.

The present invention has been made in order to solve the above problems and has an object of providing a touchless transaction method enabling a user to execute a transaction without directly operating an automatic transaction apparatus, a touchless transaction system, a transaction management apparatus, and an automatic transaction apparatus.

In order to solve the above problems, a touchless transaction method is provided as set out in the appended set of claims.

According to the present invention, a user is enabled to, using a mobile terminal used by the user himself/herself, transmit information associated with personal authentication and information associated with a prescribed transaction content to a transaction management apparatus and execute the prescribed transaction content without operating a prescribed automatic transaction apparatus.

### BRIEF DESCRIPTION OF THE DRAWINGS

FIG. 1 is an entire configuration diagram of a touchless transaction system according to the present embodiment;
FIG. 2 is a function configuration diagram of an automatic transaction apparatus;
FIG. 3 is a function configuration diagram of a payment application server;
FIG. 4 is a function configuration diagram of a mobile terminal;
FIG. 5 shows an example of a transaction information table;
FIG. 6 shows an example of an authentication information table;
FIG. 7 shows the flow of a touchless transaction method;
FIG. 8 shows the first half of the flow of a touchless transaction method according to a second embodiment;
FIG. 9 shows the second half of the flow of the touchless transaction method;
FIG. 10 shows the first half of the flow of a touchless transaction method according to a third embodiment;
FIG. 11 shows the second half of the flow of the touchless transaction method;
FIG. 12 is an application screen displayed on a mobile terminal;
FIG. 13 shows the first half of the flow of a touchless transaction method according to a fourth embodiment;
FIG. 14 shows the flow of a touchless transaction method according to a fifth embodiment; and
FIG. 15 is an entire configuration diagram of a touchless transaction system according to a sixth embodiment.

### DETAILED DESCRIPTION OF THE EMBODIMENT

Hereinafter, embodiments of the present invention will be described with reference to the drawings. In a touchless transaction method and a touchless transaction system according to the embodiments, an automatic transaction apparatus 10 is indirectly operated using a mobile terminal 3 used by a user. The user is not needed to positively touch the automatic transaction apparatus 10 to execute a money transaction and is enabled to execute a series of transactions including the input of authentication information, the input of transaction contents, and the instruction of an execution in so-called a touchless manner.

In the embodiments, a payment application server 22 serving as a "transaction management apparatus" is provided between a mobile terminal 3 and an automatic transaction apparatus 10, and a user inputs personal authentication information and transaction contents to the payment application server 22 with the mobile terminal 3. The mobile terminal 3 does not directly communicate with the automatic transaction apparatus 10, but the payment application server 22 gives instructions to the automatic transaction apparatus 10 according to input from the mobile terminal 3.

A touchless transaction system TLS according to the embodiments connects a mobile terminal 3 operated by a user U to execute a transaction and a center 2 of a bank to each other and transmits transaction information generated by the mobile terminal 3 to the center 2. Thus, the user is enabled to execute the transaction without physically contacting the automatic transaction apparatus 10 in operation.

The touchless transaction system TLS according to the embodiments is enabled to use short-distance communication for personal authentication to determine whether a user U executing a transaction is identical to a user inputting transaction contents with a mobile terminal 3. According to the embodiments, a user U is enabled to efficiently and promptly execute a transaction without touching a touch panel or the like of an automatic transaction apparatus 10 by completing the input of transaction information and personal authentication with a mobile terminal 3 in advance.

Hereinafter, the present embodiment will describe a money transaction using an ATM as an example. However, the present disclosure is not limited to the embodiment and is also appliable to the issue of various tickets, the issue of various certificates, or the like.

### First Embodiment

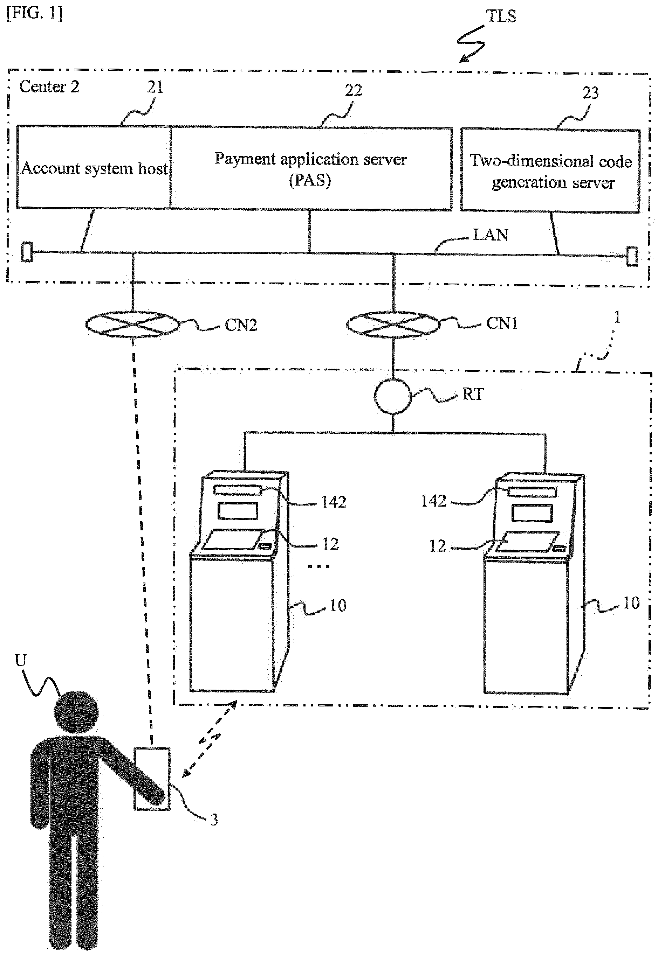

A first embodiment will be described with reference to FIGS. 1 to 7. In the present embodiment, a user U efficiently and promptly executes various transactions without touching a screen 12 of an automatic transaction apparatus 10 by completing the input of transaction information or personal authentication with a mobile terminal 3 in advance.

The present embodiment will show an example in which a user confirms the positions of an automatic transaction apparatus 10 and a mobile terminal 3 by short-distance communication when requesting payment in a touchless manner. Another embodiment to be described later will describe a case in which a user U reserves a transaction content with a mobile terminal 3 in advance and goes to an automatic transaction apparatus 10 later. Moreover, another embodiment to be described later will describe a case in which a center 2 transmits a notification corresponding to the present balance of an automatic transaction apparatus 10 specified by a user to a mobile terminal 3 when the user reserves a plurality of transaction contents with the mobile terminal 3.

FIG. 1 shows an example of the entire configuration of a touchless transaction system TLS according to the present embodiment. The system TLS includes, for example, an automatic transaction apparatus 10, an account system host computer (hereinafter called an account system host) 21, a payment application server 22, and a two-dimensional code generation server 23. Hereinafter, the payment application server 22 will be abbreviated as a PAS 22 depending on circumstances.

The account system host 21, the PAS 22, and the two-dimensional code generation server 23 are connected to each other by, for example, a local communication network LAN and bi-directionally and communicably connected to respective automatic transaction apparatuses 10 via a security router RT by a dedicated line CN1.

A mobile terminal 3 is bi-directionally and communicably connected to the PAS 22 inside the center 2 via a public line CN2 such as the Internet. Hereinafter, the public line CN2 will be called the Internet CN2. When the Internet CN2 is used, a technology such as SSL (Secure Sockets Layer) to protect the privacy of communication is used.

In the present embodiment, the center 2 and the respective automatic transaction apparatuses 10 are connected to each other by the dedicated line CN1, and the center 2 and respective mobile terminals 3 are connected to each other by the Internet CN2. The dedicated line CN1 having high security is used when transaction execution instructions are transmitted from the center 2 to the automatic transaction apparatuses 10 retaining cash money. On the other hand, the widespread Internet CN2 is used when the center 2 receives transaction contents or the like from the mobile terminals 3. Thus, the touchless transaction system TLS according to the present embodiment achieves both security and convenience.

The automatic transaction apparatus 10 is, for example, an ATM (Automated Teller Machine), a CD (Cash Dispenser), or the like installed inside a branch (hereinafter called a branch) 1 or outside a shop of a financial institution such as a bank, a credit association, a post office, and a consumer finance company. The automatic transaction apparatus 10 is an apparatus operated by a user U himself/herself of a financial institution to execute a financial transaction such as receipt, payment, passbook entry, balance inquiry, and transfer. However, in the present embodiment, the user U is not needed to physically touch the automatic transaction apparatus 10. Hereinafter, the automatic transaction apparatus 10 will be described using an ATM 10 as an example. In the figures, the automatic transaction apparatus 10 is shown as the ATM 10. Hereinafter, a financial transaction will be abbreviated as a transaction depending on circumstances.

The account system host 21 is an information processing apparatus that is installed in a district center (hereinafter called a bank center) 2 of a financial institution and stores various information in banking.

The payment application server (PAS) 22 serving as a "transaction management apparatus" is an apparatus that is installed in the bank center 2 and manages financial transaction information. The payment application server 22 will be described later.

The two-dimensional code generation server 23 is an apparatus that is installed in the bank center 2 and generates two-dimensional codes to be displayed on the automatic transaction apparatus 10.

The mobile terminal 3 is an apparatus that is carried by a user and used to input financial transaction information requested to be executed by the automatic transaction apparatus 10. The mobile terminal 3 will be described later.

In the present embodiment, the PAS 22 and the two-dimensional code generation server 23 are assumed to be installed in the bank center 2. However, an installation place of the PAS 22 is not limited to a specific one so long as the PAS 22 is enabled to communicate with the automatic transaction apparatus 10, the two-dimensional code generation server 23, and the mobile terminal 3. The PAS 22 may be installed in a place other than the bank center 2.

The PAS 22 may be configured to include the function of the account system host 21 and/or the function of the two-dimensional code generation server 23. When the PAS 22 serves as the two-dimensional code generation server 23, the two-dimensional code generation server 23 may be omitted from the center 2.

FIG. 1 shows a state in which one user U uses one automatic transaction apparatus 10. Actually, it is possible that a plurality of users U execute a transaction with a plurality of automatic transaction apparatuses 10. Further, it is also possible that one user U executes a plurality of transactions with one automatic transaction apparatus 10 or one user executes a transaction with a plurality of automatic transaction apparatuses 10. Further, it is also possible that a plurality of buildings 1 exist in which an automatic transaction apparatus 10 is installed or a plurality of automatic transaction apparatuses 10 are installed in one building 1.

The automatic transaction apparatus 10 is an apparatus operated by the user U to execute various transactions such as receiving and paying bills or coins. On the operation-side front surface of the automatic transaction apparatus 10, a display input unit 12 and a receipt/payment unit 142 are provided.

The display input unit 12 displays an operation guidance and a two-dimensional code or displays information directly or indirectly input by the user U. In the touchless transaction system TLS according to the present embodiment, the user U is not needed to directly touch and operate the display input unit 12 by hand but may directly touch and operate the display input unit 12 by hand. The receipt/payment unit 142 is used to receive/pay bills or coins.

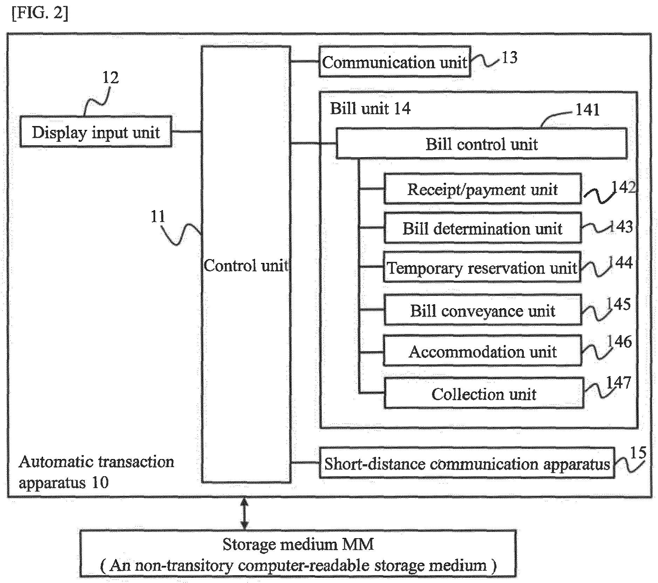

FIG. 2 shows a function configuration example of the automatic transaction apparatus 10. The automatic transaction apparatus 10 has, for example, a control unit 11, a display input unit 12, a communication unit 13, a bill unit 14, and a short-distance communication apparatus 15.

The control unit 11 includes a processor, a main storage apparatus, and an auxiliary storage apparatus (each not shown), and a prescribed computer program is stored in advance in a program database inside the auxiliary storage apparatus. The processor reads the prescribed computer program from the auxiliary storage apparatus into the main storage apparatus and executes the same to realize respective functions associated with a touchless transaction.

Note that a storage medium MM such as a flash memory and a hard disk drive may be, for example, connected to the automatic transaction apparatus 10 to transfer a part or all of the computer program between the auxiliary storage apparatus inside the control unit 11 and the storage medium MM.

The display input unit 12 is an apparatus that exchanges information with a user and constituted as, for example, a touch panel. The display input unit 12 displays information needed to execute a transaction with the automatic transaction apparatus 10 to the user. In the present embodiment, the display input unit 12 displays a two-dimensional code received from the two-dimensional code generation server 23. The two-dimensional code includes identification information for specifying the automatic transaction apparatus 10 and a number for managing a transaction.

The user may input information associated with a transaction via the display input unit 12. However, the touchless transaction system TLS according to the present embodiment enables the user to execute a transaction without directly touching the display input unit 12 by hand.

The communication unit 13 communicates with the account system host 21, the PAS 22, or the like. The communication unit 13 transmits information (data) input via the display input unit 12 to the account system host 21 or the PAS 22 or may display information received from the account system host 21 or the PAS 22.

The bill unit 14 includes, for example, a bill control unit 141, a receipt/payment unit 142, a bill determination unit 143, a temporary reservation unit 144, a bill conveyance unit 145, an accommodation unit 146, and a collection unit 147.

The short-distance communication apparatus 15 is an apparatus that transmits and receives data to and from the mobile terminal 3 by short-distance wireless communication. In the present embodiment, a determination is made as to whether the user carrying the mobile terminal 3 exists near the automatic transaction apparatus 10 by the short-distance wireless communication between the mobile terminal 3 and the automatic transaction apparatus 10 as will be described later. The determination result of the positional relationship between the mobile terminal 3 and the automatic transaction apparatus 10 may be notified from the mobile terminal 3 to the PAS 22 or may be notified from the automatic transaction apparatus 10 to the PAS 22.

A face image of the user shot by a camera of the automatic transaction apparatus 10 may be compared with a face image of the user registered in advance in the PAS 22 to determine whether the user carrying the mobile terminal 3 exists in front of the automatic transaction apparatus 10.

Moreover, the position of the mobile terminal 3 may be measured to determine whether the user carrying the mobile terminal 3 exists near the automatic transaction apparatus 10. On this occasion, a technology such as a GPS (Global Positioning System), Wi-Fi positioning, RFID (Radio Frequency Identifier) positioning, and beacon positioning is available.

The bill control unit 141 controls the respective function units 142 to 147 that will be described below. The receipt/payment unit 142 executes the receipt of bills (received bills) inserted by the user in receipt processing and the payment of bills (paid bills) paid to the user in payment processing.

The bill determination unit 143 determines bill states such as the money types, the normal/damaged states, the authenticity, the folded states, and the broken states of bills in receipt processing or payment processing.

The temporary reservation unit 144 is used to temporarily accommodate bills until the money types, the number, the total amounts, or the like of received bills read by the bill determination unit 143 are confirmed by the user via the display input unit 12 and receipt processing is settled between the automatic transaction apparatus 10 and the account system host 21.

The bill conveyance unit 145 is a conveyance path or a conveyance member used to convey bills to the respective function units.

The accommodation unit 146 accommodates bills handled by the automatic transaction apparatus 10 for each money type. Generally, the automatic transaction apparatus 10 handles a plurality of types of bills and therefore includes a plurality of accommodation units. The accommodation unit 146 is called a cash money cassette depending on circumstances.

The collection unit 147 collects and reserves bills determined to be inappropriate for receipt/payment by the bill determination unit 143 or bills left behind by the user.

Between the program of the automatic transaction apparatus 10 and the communication unit 13 and the short-distance communication apparatus 15, an I/O unit (not shown) executes the buffering of data or various mediation processing.

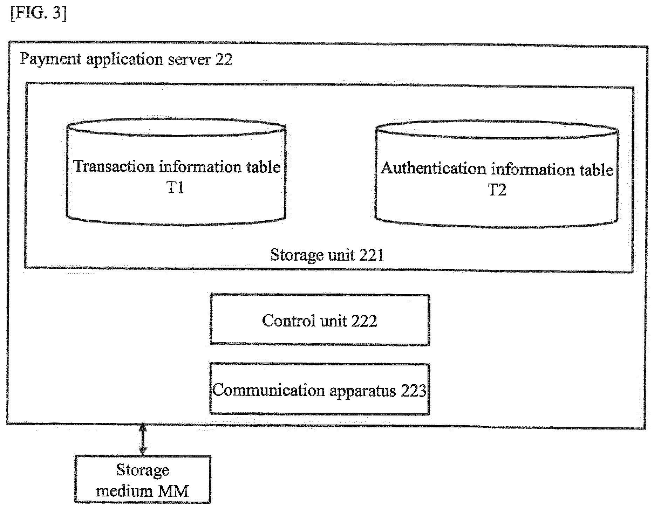

FIG. 3 shows a function configuration example of the PAS 22. The PAS 22 has, for example, a storage unit 221, a control unit 222, and a communication apparatus 223.

The communication apparatus 223 communicates with the automatic transaction apparatus 10, the two-dimensional code generation server 23, the mobile terminal 3, or the like. The storage unit 221 stores a transaction information table T1 and an authentication information table T2 in addition to a prescribed computer program used to realize a function as the PAS 22. The control unit 222 executes the prescribed computer program stored in the storage unit 221 to appropriately update the respective tables T1 and T2.

The transaction information table T1 is a table in which financial transaction information input by the user via the automatic transaction apparatus 10 or the mobile terminal 3 is registered. The authentication information table T2 is a table in which authentication information used by the user to execute a financial transaction with the automatic transaction apparatus 10 or the mobile terminal 3 is managed. The details of the respective tables T1 and T2 will be described later.

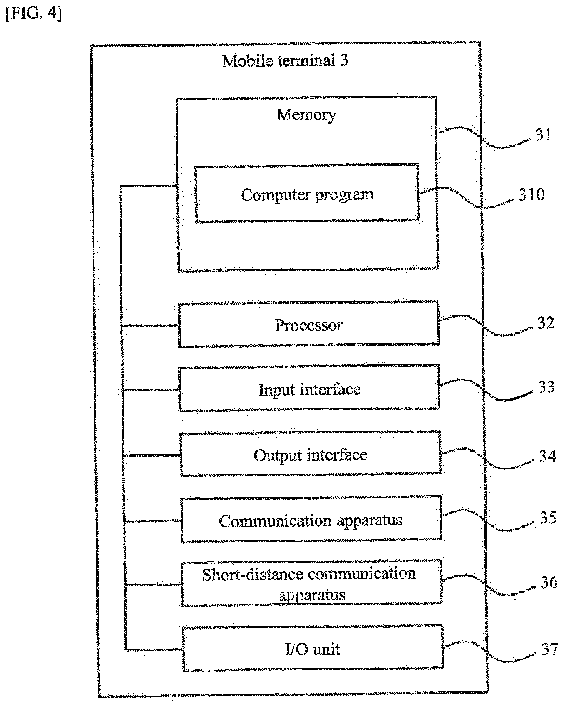

FIG. 4 shows a function configuration example of the mobile terminal 3. The mobile terminal 3 has, for example, a memory 31, a processor 32, an input interface 33, an output interface 34, a communication apparatus 35, a short-distance communication apparatus 36, and an input/output unit (I/O unit in FIG. 4) 37.

In the program database of the memory 31, a prescribed computer program 310 that realizes a function to execute a touchless transaction method according to the present embodiment is stored. When the processor 32 reads the prescribed computer program 310 from the memory 31 and executes the same, a role needed to be played by the mobile terminal 3 in the touchless transaction system is realized. The computer program 310 is one of application programs operating on the mobile terminal 3 and abbreviated as App in the figures depending on circumstances. The computer program 310 may also be called, for example, a touchless transaction application.

The input interface 33 includes various buttons or the like operated by the user. The output interface 34 includes a display screen that presents information to the user, or the like. The communication apparatus 35 exchanges data with an external apparatus such as the PAS 22. The short-distance communication apparatus 36 communicates with the automatic transaction apparatus 10 by short-distance wireless communication.

The mobile terminal 3 is connected by the communication apparatus 35 to an external apparatus such as the PAS 22 via the Internet CN2 and exchanges data with the external apparatus. Between the respective function units of the mobile terminal 3 that will be described later and the communication apparatus 35 and the short-distance communication apparatus 36, the I/O unit 37 executes the buffering of data or various mediation processing.

As one input interface 33, the mobile terminal 3 also has a two-dimensional barcode reader used to receive specific information on the automatic transaction apparatus 10 that is displayed on the automatic transaction apparatus 10 during a financial transaction as a two-dimensional barcode. The mobile terminal 3 may only be one that includes the configurations described above, and transportable information equipment such as a mobile phone, a PHS, a PDA, a tablet-type personal computer, and a laptop-type personal computer may be, for example, used as such.

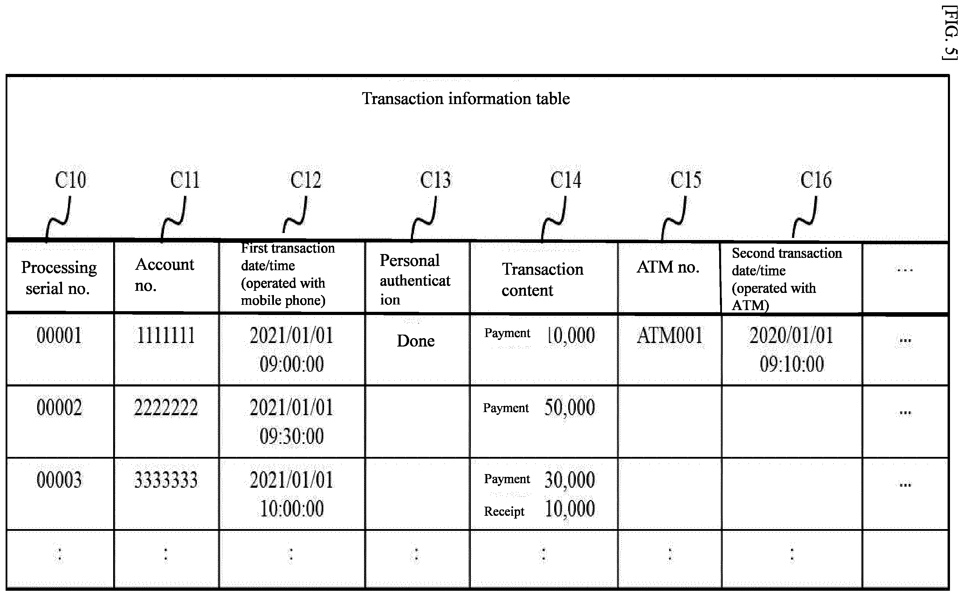

FIG. 5 shows an example of the transaction information table T1. The transaction information table T1 manages financial transaction information executed by the user operating the mobile terminal 3 and the automatic transaction apparatus 10. The transaction information table T1 stores information such as a processing serial number C10, an account number C11, a first transaction date and time C12, personal authentication C13, a transaction content C14, an ATM number C15, and a second transaction date and time C16.

The processing serial number C10 is information that is assigned by the PAS 22 and used to uniquely identify a financial transaction. The account number C11 is information showing an account number of a financial institution owned by a user. The first transaction date and time C12 is information showing a date and time at which the user has executed a financial transaction with the mobile terminal 3 and may be a time point at which the transaction has been started or a time point at which the transaction has been settled. The personal authentication C13 is information showing whether the user has executed authentication confirmation in a financial transaction operation with the mobile terminal 3. The transaction content C14 is information showing what financial transaction has been selected by the user and is information such as "a payment transaction of 10,000 yen" showing a transaction amount and a transaction type in combination. The ATM number C15 is information used to uniquely identify the automatic transaction apparatus 10. The second transaction date and time C16 is information showing a date and time at which the user has executed a financial transaction at the automatic transaction apparatus 10 and may be a time point at which the transaction has been started or a time point at which the transaction has been settled.

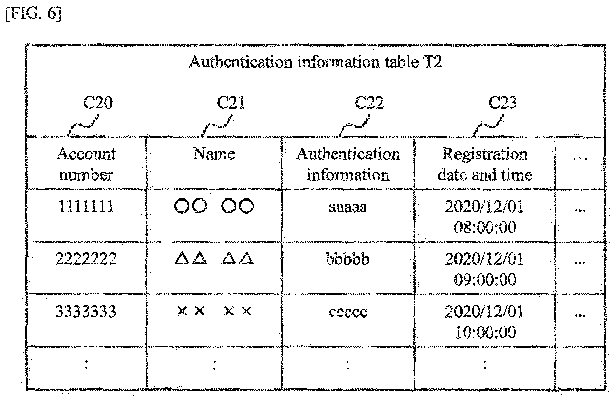

FIG. 6 is a diagram showing the authentication information table T2. The authentication information table T2 is a table that manages information used to be verified for personal authentication confirmation when the user executes a financial transaction with the mobile terminal 3. As a preparation for executing a financial transaction, the user registers authentication information in the PAS 22. The registration may be made via the input interface 33 of the mobile terminal 3 or may be made according to other methods. The authentication information table T2 stores information such as an account number C20, a name C21, authentication information C22, and a registration date and time C23.

The account number C20 is identical to the account number C11 of the transaction information table T1 described above. The name C21 is the name of the user. The authentication information C22 is information used to confirm personal identification when the user executes a financial transaction operation with the mobile terminal 3. The authentication information is information such as a password linked to an account number or living-body information such as a user's fingerprint or face that is not allowed to be verified by persons other than the user. The registration date and time C23 is information showing a date and time at which the user has registered information such as an account number, a name, and authentication information in the PAS 22 with the mobile terminal 3.

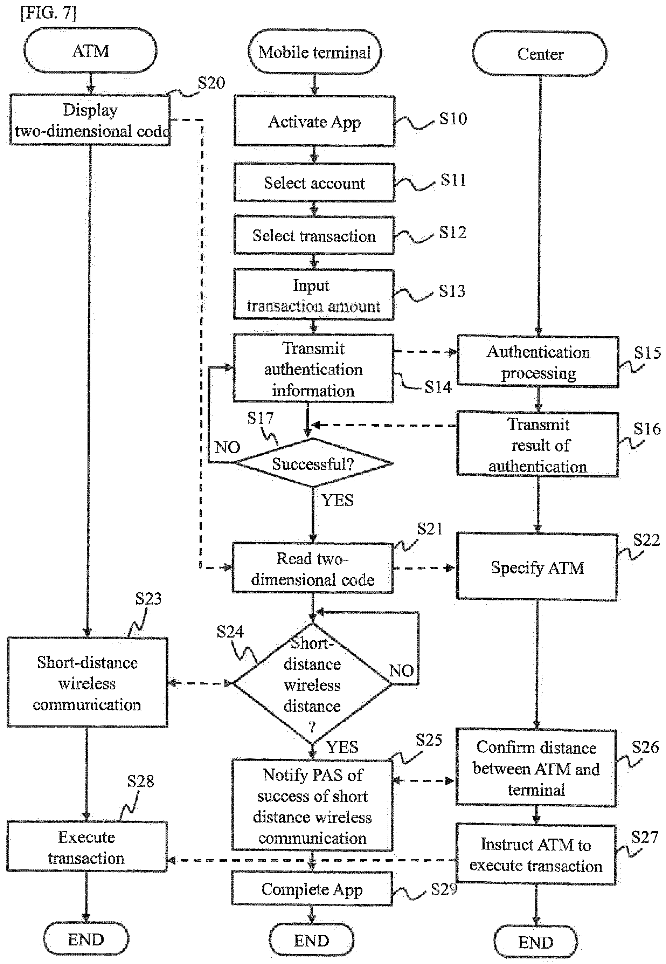

FIG. 7 shows the flow of the touchless transaction method. The present embodiment will describe a case in which a user carries the mobile terminal 3 and exists in front of the automatic transaction apparatus 10 and a case in which the user is enabled to operate both the mobile terminal 3 and the automatic transaction apparatus 10.

The two-dimensional code generation server 23 of the center 2 generates a two-dimensional code for each automatic transaction apparatus 10 and distributes the same. The automatic transaction apparatus 10 displays a two-dimensional code including an identification number (ATM identification number) used to uniquely identify the automatic transaction apparatus 10 and a transaction number used to uniquely identify a financial transaction on the display input unit 12 (S20). In step S20, a user operation is not needed in the processing of step S20, and the two-dimensional code is displayed at all times when the automatic transaction apparatus 10 is in an executable state.

The two-dimensional code displayed on the display input unit 12 may be generated from data received from the two-dimensional code generation server 23 or may be generated in the automatic transaction apparatus 10 and notified to the two-dimensional code generation server 23.

Then, in the following steps, the user executes a next operation with the input interface 33 of the mobile terminal 3.

First, the user activates the computer program 310 serving as a touchless transaction application (S10). Hereinafter, the processing steps of the mobile terminal 3 will be executed by the touchless transaction application. Accordingly, an operating subject is the touchless transaction application, but the mobile terminal 3 will be described as the acting subject in some cases for the sake of convenience.

The user selects an account used to execute a transaction on the menu screen of the touchless transaction application (S11) and also selects the type of the requested financial transaction (S12). Here, a case in which a payment transaction to withdraw cash money is selected will be described.

The user inputs a requested paid amount to the amount input column of the touchless transaction application (S13). On this occasion, the user may select the paid amount as a transaction amount from among a plurality of alternatives (for example, 1,000 yen, 2,000 yen, 5,000 yen, 10,000 yen, or the like) displayed on the mobile terminal 3 or may manually input the amount.

The user inputs authentication information for personal identification to the authentication information input column of the touchless transaction application and causes the input authentication information to be transmitted to the PAS 22 (S14). The input of the authentication information may be made according to a method in which a password linked to an account number is manually input or may be made according to a method in which user's living-body information such as a fingerprint is input. In step S14, the account number, the transaction type, the transaction amount, and the authentication information are transmitted to the PAS 22 of the center 2 via the communication network CN2. In FIG. 7, processing in the PAS 22 is shown as processing in the "center."

The PAS 22 identifies the account number and the authentication information received from the mobile terminal 3 with authentication information on the user registered in advance in the authentication information table T2 (S15). The PAS 22 transmits the result of the personal authentication to the mobile terminal 3 (S16).

The touchless transaction application determines the success or failure of the personal authentication (S17). When the personal authentication is failed (NO in S17), the touchless transaction application returns to step S14. Then, the touchless transaction application causes the user to input authentication information for the personal identification again and transmits the authentication information to the PAS 22 (S14).

When the personal authentication is successful (YES in S17), the touchless transaction application instructs the user to read the two-dimensional code displayed on the display input unit 12 of the automatic transaction apparatus 10 with the mobile terminal 3. Then, when the user reads the two-dimensional code by a camera (not shown) of the mobile terminal 3 (S20 and S21), the touchless transaction application transmits transaction information including information such as an ATM identification number and a transaction serial number included in the two-dimensional code read from the automatic transaction apparatus 10 and the account number, the transaction type, the transaction amount, or the like input by the user to the PAS 22. The transmission timing of the transaction information from the mobile terminal 3 to the PAS 22 may be a timing before the two-dimensional code is read from the automatic transaction apparatus 10 in a case in which the personal authentication is successful.

When receiving the transaction information from the touchless transaction application of the mobile terminal 3, the PAS 22 specifies the automatic transaction apparatus 10 with which the mobile terminal 3 actually executes the transaction and updates the transaction information table T1 (S22).

After transmitting the transaction information to the PAS 22, the touchless transaction application makes an attempt to communicate with the automatic transaction apparatus 10 by short-distance wireless communication (S23) and determines whether the short-distance wireless communication is successful (S24). When the short-distance wireless communication with the automatic transaction apparatus 10 is successful (YES in S24), the touchless transaction application notifies the PAS 22 of the fact (S25).

When confirming that the mobile terminal 3 exists near the automatic transaction apparatus 10 (S26), the PAS 22 transmits the transaction contents (the transaction type and the transaction amount) included in the transaction information received and stored in step S22 to the automatic transaction apparatus 10 and instructs the automatic transaction apparatus 10 to execute the transaction (S27).

The automatic transaction apparatus 10 communicates with the account system host 21 and executes a financial transaction according to the transaction information received from the PAS 22 (S28). As a result of this, the automatic transaction apparatus 10 pays bills from the receipt/payment unit 142, and the user receives the paid bills. Finally, the user completes the touchless transaction application (S29).

In the present embodiment, the automatic transaction apparatus 10 is caused to execute a transaction, for example, when it is confirmed that the automatic transaction apparatus 10 and the mobile terminal 3 exist within a prescribed distance such as two meters in the present embodiment. Therefore, it is possible to improve reliability. For example, in a case in which the user has shot and acquired the two-dimensional code of the automatic transaction apparatus 10 in advance for the sake of convenience, it is possible to prevent a situation that a third person accidentally receives bills paid from the automatic transaction apparatus 10 when the user requests the start of a transaction at a place distant from the automatic transaction apparatus 10 (S21 and S22).

It is also possible to cause the two-dimensional code displayed on the automatic transaction apparatus 10 and the transaction information table T1 to include information on a transaction number used to uniquely identify a financial transaction and change the two-dimensional code for each transaction of the user.

As a result, even in a case in which a plurality of persons make an attempt to simultaneously read the two-dimensional code and execute a financial transaction at the automatic transaction apparatus 10, the PAS 22 is enabled to confirm the overlap of a transaction number. Therefore, it is possible to secure the order of a transaction.

According to the present embodiment configured as described above, the user is enabled to input information needed to execute personal authentication and information on transaction contents with the mobile terminal 3 used by the user. Therefore, the user is enabled to execute a financial transaction via the automatic transaction apparatus 10 without directly touching the display input unit 12 of the automatic transaction apparatus 10 by hand.

That is, in the touchless transaction system of the present embodiment, the PAS 22 that is physically separated from the automatic transaction apparatus 10 and provided on a communication network is caused to execute the reception processing and the confirmation processing of information needed to execute a transaction with the user. Therefore, the user is enabled to transmit the information needed to execute the transaction from the mobile terminal 3 to the PAS 22.

It is also considered that a function to receive information from the mobile terminal 3 is provided in the automatic transaction apparatus 10. However, the cost of the automatic transaction apparatus 10 is increased in this case. Moreover, if the mobile terminal 3 and the automatic transaction apparatus 10 are capable of directly communicating with each other, there is a possibility that a malicious computer program is transmitted from the mobile terminal 3 to the automatic transaction apparatus 10 or hacking or the like occurs.

In the touchless transaction system according to the present embodiment, one PAS 22 is enabled to deal with a plurality of mobile terminals 3 and a plurality of automatic transaction apparatuses 10. Therefore, it is possible to reduce the costs of the respective automatic transaction apparatuses 10 and reduce the operation cost and the maintenance cost of the touchless transaction system.

### Second Embodiment

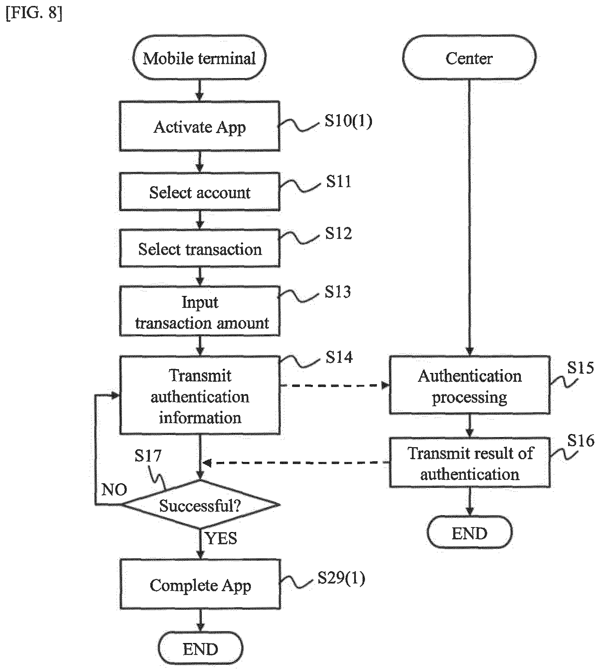

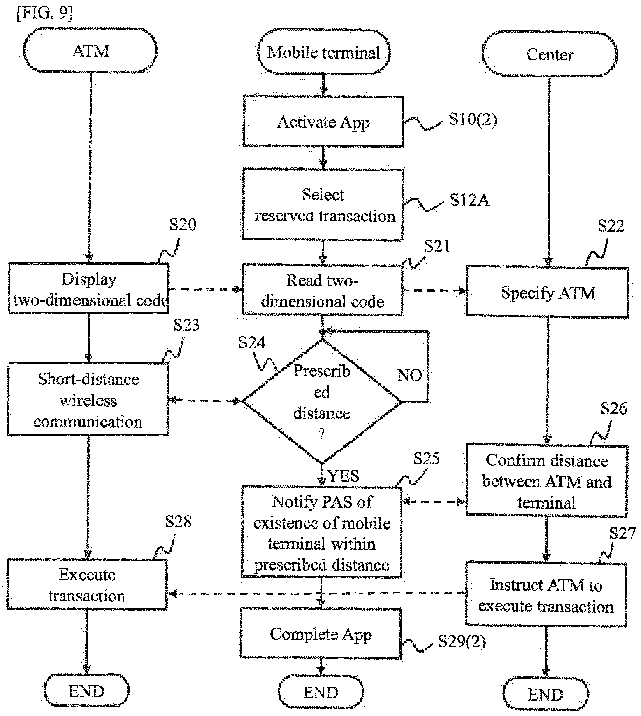

A second embodiment will be described with reference to FIGS. 8 and 9. The following embodiments including the present embodiment will mainly describe the differences between the embodiments and the first embodiment. The present embodiment will describe a case in which a user reserves a financial transaction in advance at a place not in front of an automatic transaction apparatus 10 and executes the financial transaction later at the automatic transaction apparatus 10 carrying a mobile terminal 3.

FIG. 8 shows processing until a user inputs transaction information to a touchless transaction application in advance and executes personal authentication in the flow of a touchless transaction method. In the present embodiment, processing from the activation of the touchless transaction application (S10(1)) to the completion of the touchless transaction application (S29(1)) after the success of the personal authentication will be called first-half processing for the sake of convenience.

The flow of FIG. 8 shows an operation in which the user inputs financial transaction information to the touchless transaction application of the mobile terminal 3 to reserve a transaction as a preparation for executing the financial transaction at the automatic transaction apparatus 10.

The user selects and activates the touchless transaction application using an input interface 33 of the mobile terminal 3 (S10(1)). The user selects a transaction account on the screen of the touchless transaction application (S11) and selects the type of the requested financial transaction (S12). In the present embodiment as well, it is assumed that a payment transaction is selected as the financial transaction. The user inputs a transaction amount (here, a requested paid amount) to the touchless transaction application (S13).

Then, the user inputs authentication information for personal identification to the touchless transaction application (S14). The PAS 22 identifies the authentication information received from the mobile terminal 3 with the contents of an authentication information table T2 to execute personal authentication (S15) and transmits the result of the personal authentication to the mobile terminal 3 (S16).

When the personal authentication is failed (NO in S17), the touchless transaction application returns to step S14. When the personal authentication is successful (YES in S17), the touchless transaction application (computer program 310) is completed (S29(1)).

Subsequently, an operation in which the user executes the financial transaction, which has been registered in advance in the mobile terminal 3 in the preparatory reservation processing of FIG. 8, at the automatic transaction apparatus 10 will be described with reference to FIG. 9.

The user goes to a branch or a facility in which the automatic transaction apparatus 10 is installed and activates the touchless transaction application (S10(2)). When the user selects the transaction having been reserved in the preparatory reservation processing of FIG. 8 (S12A), a two-dimensional code displayed on the automatic transaction apparatus 10 is read by the input interface 33 of the mobile terminal 3 (S20).

The touchless transaction application transmits an ATM identification number and a transaction serial number included in the read two-dimensional code and the financial transaction information such as an account number, the type of the financial transaction, and the transaction amount having been input by the user to the PAS 22 (S21).

When receiving the information from the touchless transaction application of the mobile terminal 3, the PAS 22 specifies the automatic transaction apparatus 10 with which the mobile terminal 3 executes the transaction (S22).

The touchless transaction application performs short-distance wireless communication between the automatic transaction apparatus 10 and the mobile terminal 3 (S23) and determines whether the automatic transaction apparatus 10 and the mobile terminal 3 exist within a prescribed distance (S24).

When the mobile terminal 3 exists within the prescribed distance from the automatic transaction apparatus 10 (YES in S24), the touchless transaction application notifies the PAS 22 of the fact (S25). The PAS 22 confirms the fact that the user making an attempt to execute the transaction exists near the automatic transaction apparatus 10 by the notification from the touchless transaction application of the mobile terminal 3 (S26) and instructs the automatic transaction apparatus 10 to execute the transaction (S27).

That is, the PAS 22 transmits the transaction contents to the automatic transaction apparatus 10 after updating the transaction information table T1. The automatic transaction apparatus 10 communicates with an account system host 21 and executes the financial transaction according to the transaction information received from the PAS 22 (S28). As a result of the execution of the transaction, the automatic transaction apparatus 10 pays bills. The user receives the paid bills. Finally, the touchless transaction application of the mobile terminal 3 is completed by a user operation (S29(2)).

The present embodiment configured as described above also produces functions and effects similar to those of the first embodiment. Moreover, in the present embodiment, the user is enabled to reserve a desired transaction in advance before going to an installation place of the automatic transaction apparatus 10 (the flow of FIG. 8). Therefore, it is possible to reduce a time needed to execute the financial transaction at the automatic transaction apparatus 10 (time needed to execute the flow of FIG. 9).

The operation of reserving a transaction with the mobile terminal 3 in advance may be performed at home, a workplace, or the like or may be performed while the user is in a line in front of the automatic transaction apparatus 10 and waits for his/her turn to execute the transaction.

### Third Embodiment

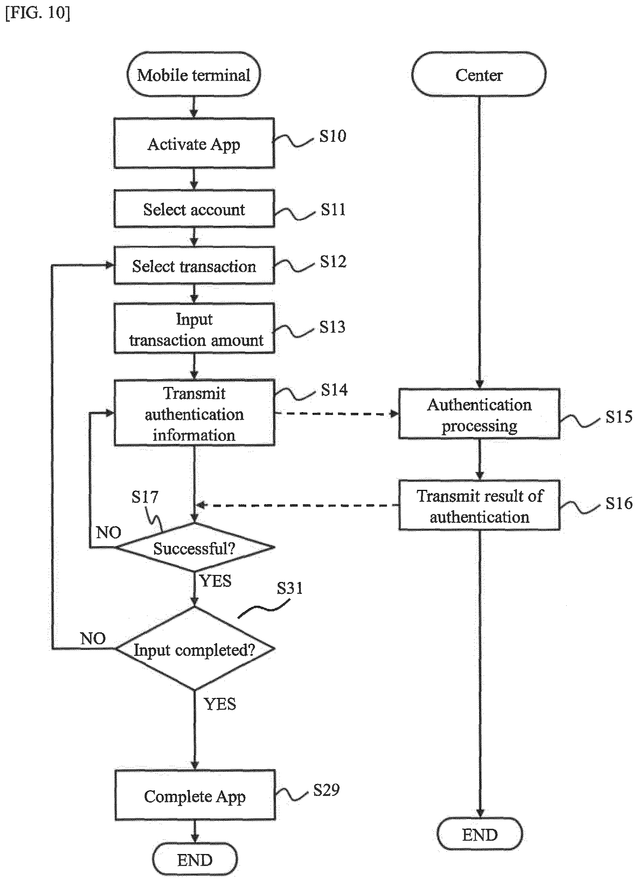

A third embodiment will be described with reference to FIGS. 10 to 12. The present embodiment will describe a case in which a user reserves a plurality of financial transactions in advance at a distant place not in front of an automatic transaction apparatus 10, goes to an installation place of the automatic transaction apparatus 10 later carrying a mobile terminal 3, and executes the financial transactions.

FIG. 10 is a flow showing processing in which the user reserves financial transactions in advance. In the present processing, an account number and authentication information are transmitted to a PAS 22 (S14) when the user selects the type of an account (S11), selects the types of the transactions (S12), and inputs transaction amounts (S13) after a touchless transaction application is activated (S10).

The PAS 22 executes authentication processing as to whether the user requesting the reservation of the financial transactions in advance is a registered user (S15) and transmits the result of the authentication processing to the touchless transaction application of the mobile terminal 3 (S16).

When the personal authentication is successful (YES in S17), the touchless transaction application determines whether all the requested transactions have been reserved (S31). When there is any transaction that has not been input (NO in S31), the touchless transaction application returns to step S12. When all the transactions requested by the user have been input (NO in S31), the touchless transaction application is completed (S29).

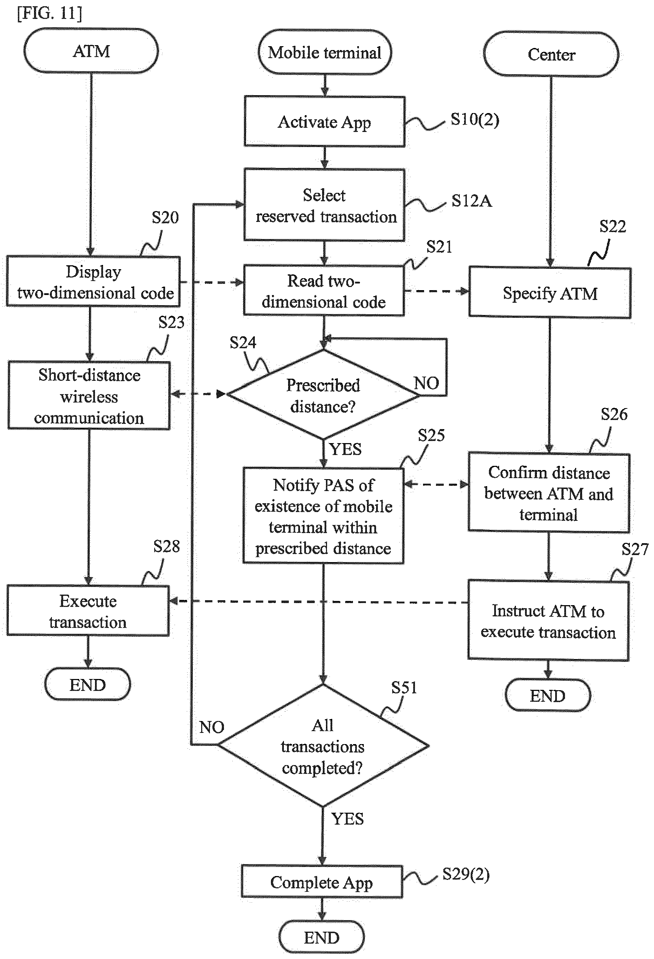

FIG. 11 is a flow showing an operation in which the user executes the plurality of financial transactions, which have been reserved in advance with the mobile terminal 3, at the automatic transaction apparatus 10.

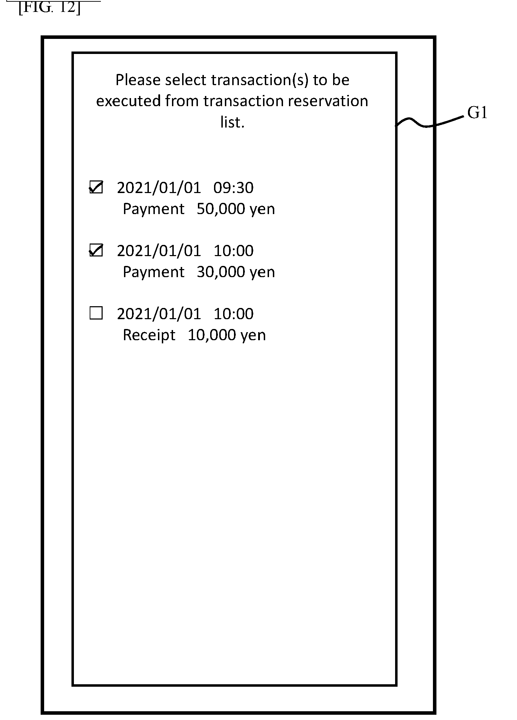

The user stands in front of the automatic transaction apparatus 10 with which the user wants to execute the transactions and activates the touchless transaction application (S10(2)) and selects one or more of the transactions reserved in advance (S12A). An output interface 34 of the mobile terminal 3 causes a transaction selection screen G1 as shown in FIG. 12 to be displayed.

When the transactions are selected, the touchless transaction application reads a two-dimensional code displayed on the automatic transaction apparatus 10 and transmits financial transaction information such as an ATM identification number, a transaction serial number, an account number, the types of the financial transactions, and transaction amounts to the PAS 22 (S21). The PAS 22 specifies the automatic transaction apparatus 10 as a transaction target (S22).

When a plurality of the transactions have been selected in step S12A, the financial transaction information transmitted to the PAS 22 is targeted at all the transactions having been selected by the user.

When confirming that the mobile terminal 3 and the automatic transaction apparatus 10 exist within a prescribed distance (S23, S24, S25, and S26), the PAS 22 transmits transaction contents to the automatic transaction apparatus 10 and instructs the automatic transaction apparatus 10 to execute the transactions (S27) after updating the transaction information table T1 for all the received financial transaction information. The automatic transaction apparatus 10 communicates with an account system host 21 and executes the financial transactions according to the financial transaction information received from the PAS 22 (S28).

As a result of the execution of the financial transactions, the automatic transaction apparatus 10 pays bills. The user receives the paid bills. On this occasion, the automatic transaction apparatus 10 may process the financial transactions received from the PAS 22 one by one or in a lump. Finally, the user completes the touchless transaction application of the mobile terminal 3 (S29(2)).

The present embodiment configured as described above also produces functions and effects similar to those of the first embodiment. Moreover, in the present embodiment, the user is enabled to reserve a plurality of transactions in advance. When actually going to an installation place of the automatic transaction apparatus 10, the user is enabled to select one or more desired transactions from among the reserved transactions and causes the automatic transaction apparatus 10 to execute the selected transactions. According to the present embodiment, it is possible to efficiently execute a plurality of transactions, reduce a timed needed to execute the transactions in front of the automatic transaction apparatus 10, and reduce times of persons waiting for their transactions in a line.

### Fourth Embodiment

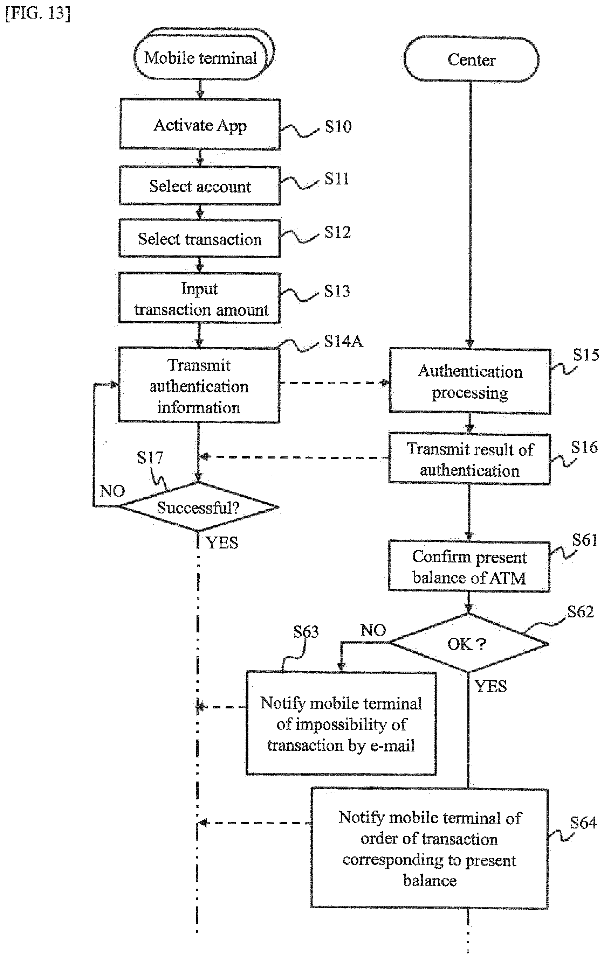

A fourth embodiment will be described with reference to FIG. 13. In the present embodiment, a PAS 22 executes prescribed control on the basis of the present balance of an automatic transaction apparatus 10 specified by a user when the user reserves a transaction in advance.

When the user completes the selection of an account (S11), the selection of the type of a transaction (S12), and the input of a transaction amount (S13) after activating a touchless transaction application (S10), the touchless transaction application transmits information specifying the automatic transaction apparatus 10 with which the user wants to execute the transaction, authentication information, and financial transaction information to the PAS 22 (S14A). The touchless transaction application displays, for example, a list of the ATMs of a financial institution in which the user has the account on a screen and causes the user to select one of the ATMs. In another way, the user may select a desired automatic transaction apparatus 10 from an ATM location map displayed on a mobile terminal 3. In another way, the user may input information specifying a desired automatic transaction apparatus 10 to an input interface 33 of the mobile terminal 3 by text or voice.

The PAS 22 executes personal authentication on the basis of the information received from the touchless transaction application of the mobile terminal 3 (S15) and transmits the result of the personal authentication to the touchless transaction application (S16).

The PAS 22 confirms the present balance of the automatic transaction apparatus 10 with which the user wants to execute the transaction via an account system host 21 (S61) and determines whether the automatic transaction apparatus 10 owns cash money equal to or larger than a transaction amount (here, a paid amount) requested by the user (S62).

When the present balance of the specified automatic transaction apparatus 10 is less than the transaction amount requested by the user (NO in S62), the PAS 22 notifies the touchless transaction application of the mobile terminal 3 of a message showing that the transaction is not possible (S63). Although omitted in FIG. 13, the touchless transaction application causes the notification of the impossibility of the transaction to be displayed on the screen of the mobile terminal 3.

When the present balance of the automatic transaction apparatus 10 specified by the user is equal to or larger than the transaction amount requested by the user (YES in S62), the PAS 22 calculates the order of the transaction corresponding to the present balance of the automatic transaction apparatus 10 and notifies the touchless transaction application of the calculated order of the transaction (S64). Although omitted in FIG. 13, the touchless transaction application causes the order of the transaction received from the PAS 22 to be displayed on the screen of the mobile terminal 3.

The order of the transaction may be the reception number of the transaction, a time zone in which the transaction is possible, or information including the reception number and the time zone. For example, the touchless transaction application is enabled to cause a message such as "A reception number for your payment transaction is No. 7. A scheduled time point of transaction with you will be around 12:45" to be displayed on the screen of the mobile terminal 3.

For example, a case in which a plurality of users specify an identical automatic transaction apparatus 10 and reserve a transaction in a prescribed time such as a lunch break is considered. However, when there are many users requesting a payment transaction or when a total of payment amounts is large although the number of users is small, there is a case that the user's transactions are not processed with the present balance of the specified automatic transaction apparatus 10. In this case, the automatic transaction apparatus 10 displays a message showing that the transactions are suspended due to the shortage of the present balance.

In a case in which a user executes a financial transaction in front of an automatic transaction apparatus 10, he/she is enabled to confirm a transaction suspension message. However, in a touchless transaction according to the present embodiment, a user is enabled to reserve a transaction in advance with his/her own mobile terminal 3 at a place distant from an automatic transaction apparatus 10. Therefore, the user is not enabled to see a transaction suspension message displayed when the present balance of the automatic transaction apparatus 10 becomes short. Thus, it is not until the user goes to an installation place of the automatic transaction apparatus 10 that he/she knows the suspension of the transaction of the automatic transaction apparatus 10.

Therefore, in the present embodiment, prescribed information is output according to the present balance of a specified automatic transaction apparatus 10 when a transaction has been reserved in advance. The prescribed information includes a message showing the impossibility of the transaction (S63) and a message showing the order of the transaction.

The present embodiment configured as described above also produces functions and effects similar to those of the first embodiment. Moreover, in the present embodiment, it is possible to improve the usability of users when the plurality of users intensively reserve a transaction in advance with a specific automatic transaction apparatus 10 in a specific time zone.

### Fifth Embodiment

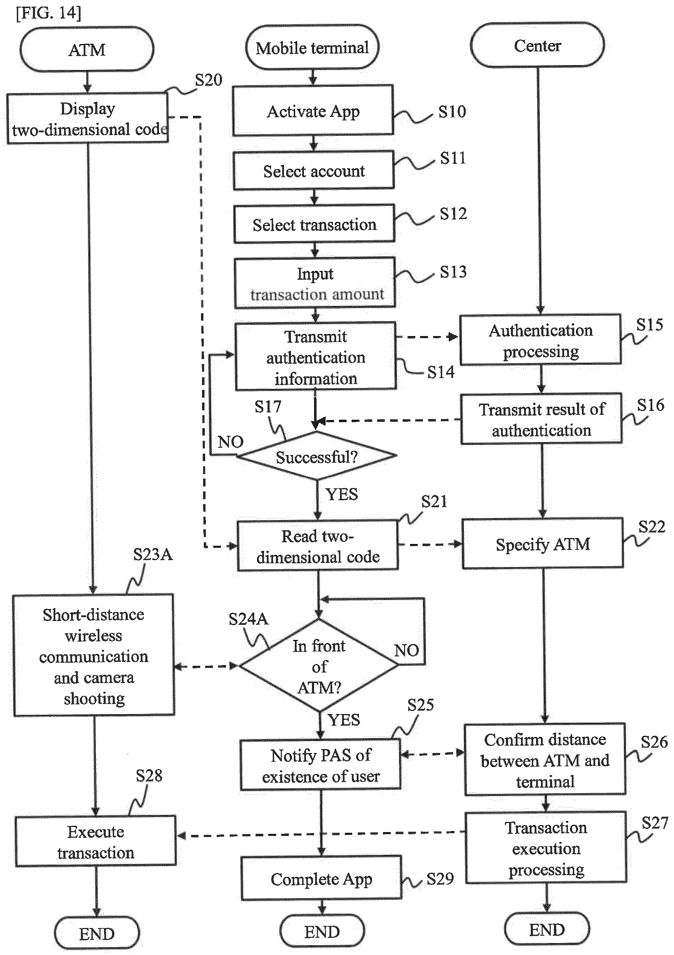

A fifth embodiment will be described with reference to FIG. 14. In the present embodiment, the existence of a user carrying a mobile terminal 3 near an automatic transaction apparatus 10 is confirmed by short-distance wireless communication, and the user is shot by a camera included in an input interface 33 of the automatic transaction apparatus 10 to confirm the existence of the user in front of the automatic transaction apparatus 10 (S23A and S24A).

FIG. 14 shows the flow of a touchless transaction. A touchless transaction application executes short-distance wireless communication with the automatic transaction apparatus 10 to confirm whether the mobile terminal 3 and the automatic transaction apparatus 10 exist within a prescribed distance (S23A). Moreover, the touchless transaction application is enabled to request the automatic transaction apparatus 10 to confirm a face image via short-distance wireless communication (S23A).

The automatic transaction apparatus 10 is enabled to determine whether an object like a human is reflected in an image shot by the camera and notify the touchless transaction application of the result of the determination. The touchless transaction application having received the notification determines that the user carrying the mobile terminal 3 exists in front of the automatic transaction apparatus 10 (YES in S24A) and notifies a PAS 22 of the fact (S25). After confirming the existence of the user in front of the automatic transaction apparatus 10 (S26), the PAS 22 instructs the automatic transaction apparatus 10 to execute a transaction (S27).

It is also possible to more precisely specify the user by using an image. For example, when the PAS 22 specifies the automatic transaction apparatus 10 with which the user makes an attempt to execute the transaction (S22), the PAS 22 may instruct the automatic transaction apparatus 10 to shoot an image of the user with the camera and transmit the shot image to the PAS 22 via a communication network CN1. By identifying a face image of the user registered in advance in an authentication information table T2 with the face image received from the automatic transaction apparatus 10, the PAS 22 is enabled to confirm that the person existing in front of the automatic transaction apparatus 10 is identical to the user himself/herself who requests the transaction.

The present embodiment configured as described above also produces functions and effects similar to those of the first embodiment. Moreover, in the present embodiment, it is possible to execute a transaction after more exactly determining whether the user exists in front of an automatic transaction apparatus 10.

Note that it is also possible to confirm whether the user exists in front of (or near) the automatic transaction apparatus 10 by measuring a position of the mobile terminal 3 and calculating the difference between the position of the mobile terminal 3 and an installation place of the automatic transaction apparatus 10.

### Sixth Embodiment

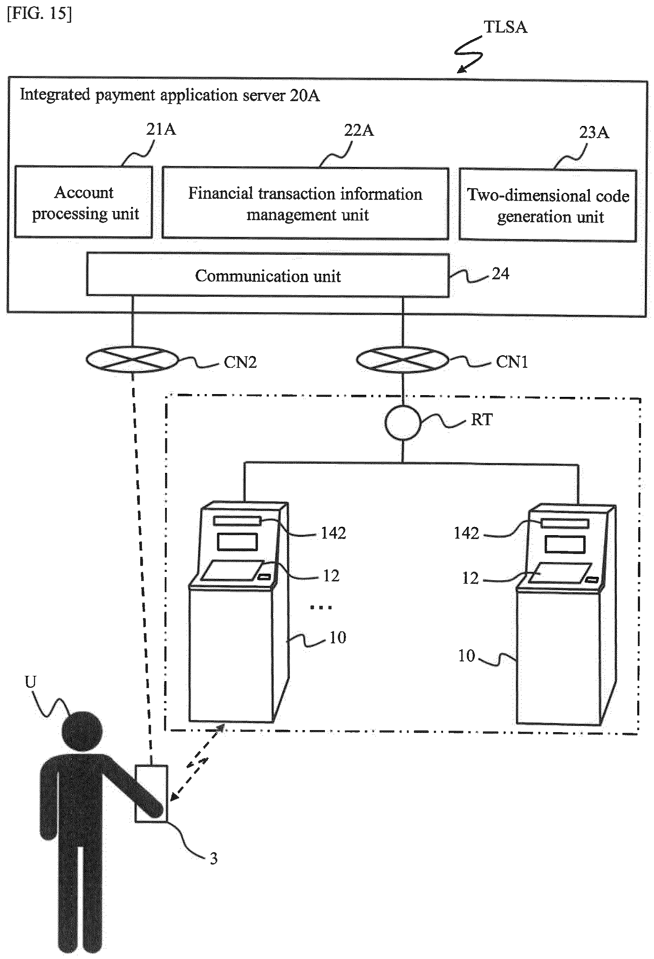

A sixth embodiment will be described with reference to FIG. 15. In a touchless transaction system TLSA according to the present embodiment, the functions of a center 2 described in the first embodiment are consolidated into an integrated payment application server 20A.

FIG. 15 is an entire configuration diagram of the touchless transaction system TLSA. The integrated payment application server 20A includes, for example, an account processing unit 21A, a financial transaction information management unit 22A, a two-dimensional code generation unit 23A, and a communication unit 24.

The account processing unit 21A has a function corresponding to the account system host 21. The financial transaction information management unit 22A has a function corresponding to a PAS 22. The two-dimensional code generation unit 23A has a function corresponding to a two-dimensional code generation server 23.

According to the present embodiment configured as described above, the integrated payment application server 20A is enabled to deal with a service even if the service is not provided by an institution having no account system host 21.

Note that the present invention is not limited to the above embodiments but includes various modifications. For example, the above embodiments are given in detail for the purpose of facilitating the understanding of the present invention and are not necessarily needed to include all the configurations described. Further, it is also possible to replace a part of a configuration of one embodiment with a configuration of another embodiment or add a configuration of another embodiment to a configuration of one embodiment. Further, it is possible to perform the addition/deletion/replacement of another configuration with respect to a part of the configurations of the respective embodiments. Further, it is possible to store information such as programs, tables, and files for realizing the respective configurations in a storage apparatus such as a memory, a hard disk, a SSD (Solid State Drive) or a recording medium such as an IC card, a SD card, and a DVD.

## Claims

1. A touchless transaction method in which a user executes a transaction without operating an automatic transaction apparatus (10) and which is executed by a transaction management apparatus (22) communicably connected to a mobile terminal (3) and the automatic transaction apparatus (10) used by the user,
the touchless transaction method comprising executing, by the transaction management apparatus (22):
an authentication step of authenticating that the user using the mobile terminal (3) is a registered user on a basis of information received from the mobile terminal (3);
a transaction content management step of receiving a prescribed transaction content requested by the user from the mobile terminal (3) and managing the received prescribed transaction content; and
an instruction step of outputting to the prescribed automatic transaction apparatus (10) an instruction to execute the prescribed transaction content when identification information for identifying the prescribed automatic transaction apparatus (10) to be used by the user is received, wherein the touchless transaction method is **characterized by** further comprising:
a position confirmation step of confirming that the mobile terminal (3) exists within a prescribed range from the prescribed automatic transaction apparatus (10) between the transaction content management step and the instruction step, wherein
the position confirmation step comprises:
the mobile terminal (3) executing short-distance wireless communication with the automatic transaction apparatus (10) to confirm whether the mobile terminal (3) and the automatic transaction apparatus (10) exist within a prescribed distance; and the automatic transaction apparatus (10) shooting the user with a camera included in an input interface (33) of the automatic transaction apparatus (10) to confirm that the user carrying the mobile terminal (3) exists in front of the automatic transaction apparatus (10), and wherein
the instruction step is executed when the mobile terminal (3) has been confirmed to exist within the prescribed range in the position confirmation step.

2. The touchless transaction method according to claim 1, wherein
in the transaction content management step,
the prescribed transaction content, which is provided in plurality, is received from the mobile terminal (3) and managed, and
in the instruction step, instructions to execute the prescribed automatic transaction apparatus (10) to execute the prescribed transaction content are output one at a time while confirming completion of processing by the prescribed automatic transaction apparatus (10).

3. The touchless transaction method according to claim 1, wherein,
in the transaction content management step, with the mobile terminal (3) being provided in plurality,
the prescribed transaction content is received from each of the plurality of the mobile terminals and managed,
the prescribed transaction content includes identification information for identifying a prescribed automatic transaction apparatus (10) that is to be used by the user, and
prescribed information corresponding a present balance of the prescribed automatic transaction apparatus (10) and the prescribed transaction content received from the mobile terminals is transmitted to the mobile terminals.

4. The touchless transaction method according to claim 3, wherein
the prescribed information includes at least one of a notification showing that a transaction is not possible due to a shortage of the present balance and a notification showing a transaction order corresponding to the present balance.

5. The touchless transaction method according to claim 1, wherein
the identification information for identifying the prescribed automatic transaction apparatus (10) is received by the mobile terminal (3) from the prescribed automatic transaction apparatus (10) and transmitted to the transaction management apparatus (22).

## Patentansprüche

1. Berührungsloses Transaktionsverfahren, bei dem ein Benutzer eine Transaktion ausführt, ohne eine automatische Transaktionsvorrichtung (10) zu bedienen, und das von einer Transaktionsverwaltungsvorrichtung (22) ausgeführt wird, die kommunikativ mit einem mobilen Endgerät (3) und der automatischen Transaktionsvorrichtung (10), die von dem Benutzer verwendet wird, verbunden ist,
wobei das berührungslose Transaktionsverfahren das Ausführen von Folgendem durch die Transaktionsverwaltungsvorrichtung (22) umfasst:
einen Authentifizierungsschritt des Authentifizierens, dass der Benutzer, der das mobile Endgerät (3) verwendet, ein registrierter Benutzer ist, auf der Basis von Informationen, die von dem mobilen Endgerät (3) empfangen werden;
einen Transaktionsinhaltsverwaltungsschritt des Empfangens eines vorgeschriebenen Transaktionsinhalts, der von dem Benutzer von dem mobilen Endgerät (3) angefordert wird, und des Verwaltens des empfangenen vorgeschriebenen Transaktionsinhalts; und
einen Anweisungsschritt des Ausgebens einer Anweisung an die vorgeschriebene automatische Transaktionsvorrichtung (10), um den vorgeschriebenen Transaktionsinhalt auszuführen, wenn Identifikationsinformationen zum Identifizieren der vorgeschriebenen automatischen Transaktionsvorrichtung (10), die von dem Benutzer verwendet werden soll, empfangen werden, wobei das berührungslose Transaktionsverfahren **dadurch gekennzeichnet ist, dass** es ferner Folgendes umfasst:
einen Positionsbestätigungsschritt des Bestätigens, dass das mobile Endgerät (3) innerhalb eines vorgeschriebenen Bereichs von der vorgeschriebenen automatischen Transaktionsvorrichtung (10) zwischen dem Transaktionsinhaltsverwaltungsschritt und dem Anweisungsschritt vorhanden ist, wobei
der Positionsbestätigungsschritt Folgendes umfasst:
das mobile Endgerät (3), das eine drahtlose Kurzstreckenkommunikation mit der automatischen Transaktionsvorrichtung (10) ausführt, um zu bestätigen, ob das mobile Endgerät (3) und die automatische Transaktionsvorrichtung (10) innerhalb eines vorgeschriebenen Abstands vorhanden sind; und die automatische Transaktionsvorrichtung (10), die den Benutzer mit einer Kamera aufnimmt, die in einer Eingabeschnittstelle (33) der automatischen Transaktionsvorrichtung (10) enthalten ist, um zu bestätigen, dass der Benutzer, der das mobile Endgerät (3) trägt, vor der automatischen Transaktionsvorrichtung (10) vorhanden ist, und wobei
der Anweisungsschritt ausgeführt wird, wenn in dem Positionsbestätigungsschritt bestätigt wurde, dass das mobile Endgerät (3) innerhalb des vorgeschriebenen Bereichs vorhanden ist.

2. Berührungsloses Transaktionsverfahren nach Anspruch 1, wobei
in dem Transaktionsinhaltsverwaltungsschritt
der vorgeschriebene Transaktionsinhalt, der mehrfach bereitgestellt wird, von dem mobilen Endgerät (3) empfangen und verwaltet wird, und
in dem Anweisungsschritt Anweisungen zum Ausführen der vorgeschriebenen automatischen Transaktionsvorrichtung (10), um den vorgeschriebenen Transaktionsinhalt auszuführen, nacheinander ausgegeben werden, während der Abschluss der Verarbeitung durch die vorgeschriebene automatische Transaktionsvorrichtung (10) bestätigt wird.

3. Berührungsloses Transaktionsverfahren nach Anspruch 1, wobei
in dem Transaktionsinhaltsverwaltungsschritt, wobei das mobile Endgerät (3) mehrfach bereitgestellt wird,
der vorgeschriebene Transaktionsinhalt von jedem der mehreren mobilen Endgeräte empfangen und verwaltet wird,
der vorgeschriebene Transaktionsinhalt Identifikationsinformationen zum Identifizieren einer vorgeschriebenen automatischen Transaktionsvorrichtung (10) enthält, die von dem Benutzer verwendet werden soll, und
vorgeschriebene Informationen, die einem gegenwärtigen Guthaben der vorgeschriebenen automatischen Transaktionsvorrichtung (10) und dem vorgeschriebenen Transaktionsinhalt, der von den mobilen Endgeräten empfangen wird, entsprechen, an die mobilen Endgeräte übertragen werden.

4. Berührungsloses Transaktionsverfahren nach Anspruch 3, wobei
die vorgeschriebenen Informationen eine Benachrichtigung, die zeigt, dass eine Transaktion aufgrund eines Mangels an dem gegenwärtigen Guthaben nicht möglich ist, und/oder eine Benachrichtigung, die eine Transaktionsreihenfolge zeigt, die dem gegenwärtigen Guthaben entspricht, enthalten.

5. Berührungsloses Transaktionsverfahren nach Anspruch 1, wobei
die Identifikationsinformationen zum Identifizieren der vorgeschriebenen automatischen Transaktionsvorrichtung (10) von dem mobilen Endgerät (3) von der vorgeschriebenen automatischen Transaktionsvorrichtung (10) empfangen und an die Transaktionsverwaltungsvorrichtung (22) übertragen werden.

## Revendications

1. Procédé de transaction sans contact dans lequel un utilisateur exécute une transaction sans faire fonctionner un appareil de transaction automatique (10) et qui est exécuté par un appareil de gestion de transaction (22) connecté en communication à un terminal mobile (3) et à l'appareil de transaction automatique (10) utilisé par l'utilisateur,
le procédé de transaction sans contact comprenant l'exécution, par l'appareil de gestion de transaction (22) :
d'une étape d'authentification consistant à authentifier que l'utilisateur utilisant le terminal mobile (3) est un utilisateur enregistré sur la base d'informations reçues du terminal mobile (3) ;
d'une étape de gestion de contenu de transaction consistant à recevoir un contenu de transaction prescrit demandé par l'utilisateur à partir du terminal mobile (3) et à gérer le contenu de transaction prescrit reçu ; et
d'une étape d'instruction consistant à délivrer en sortie à l'appareil de transaction automatique prescrit (10) une instruction pour exécuter le contenu de transaction prescrit lorsque des informations d'identification pour identifier l'appareil de transaction automatique prescrit (10) devant être utilisé par l'utilisateur sont reçues, dans lequel le procédé de transaction sans contact est **caractérisé en ce qu'**il comprend en outre :
une étape de confirmation de position consistant à confirmer que le terminal mobile (3) existe dans une plage prescrite à partir de l'appareil de transaction automatique prescrit (10) entre l'étape de gestion de contenu de transaction et l'étape d'instruction, dans lequel
l'étape de confirmation de position comprend :
le terminal mobile (3) exécutant une communication sans fil à courte distance avec l'appareil de transaction automatique (10) pour confirmer si le terminal mobile (3) et l'appareil de transaction automatique (10) existent dans une distance prescrite ; et
l'appareil de transaction automatique (10) photographiant l'utilisateur avec une caméra incluse dans une interface d'entrée (33) de l'appareil de transaction automatique (10) pour confirmer que l'utilisateur portant le terminal mobile (3) existe devant l'appareil de transaction automatique (10), et dans lequel
l'étape d'instruction est exécutée lorsque le terminal mobile (3) a été confirmé comme existant dans la plage prescrite à l'étape de confirmation de position.

2. Procédé de transaction sans contact selon la revendication 1, dans lequel
à l'étape de gestion de contenu de transaction,
le contenu de transaction prescrit, qui est fourni en pluralité, est reçu à partir du terminal mobile (3) et géré, et
à l'étape d'instruction, des instructions pour exécuter l'appareil de transaction automatique prescrit (10) pour exécuter le contenu de transaction prescrit sont délivrées en sortie une à la fois tout en confirmant l'achèvement du traitement par l'appareil de transaction automatique prescrit (10).

3. Procédé de transaction sans contact selon la revendication 1, dans lequel
à l'étape de gestion de contenu de transaction, avec le terminal mobile (3) qui est fourni en pluralité,
le contenu de transaction prescrit est reçu à partir de chacun de la pluralité des terminaux mobiles et géré,
le contenu de transaction prescrit inclut des informations d'identification pour identifier un appareil de transaction automatique prescrit (10) qui doit être utilisé par l'utilisateur, et
des informations prescrites correspondant à un solde actuel de l'appareil de transaction automatique prescrit (10) et au contenu de transaction prescrit reçu à partir des terminaux mobiles sont transmises aux terminaux mobiles.

4. Procédé de transaction sans contact selon la revendication 3, dans lequel
les informations prescrites incluent au moins l'une d'une notification montrant qu'une transaction n'est pas possible en raison d'une pénurie du solde actuel et d'une notification montrant un ordre de transaction correspondant au solde actuel.

5. Procédé de transaction sans contact selon la revendication 1, dans lequel
les informations d'identification pour identifier l'appareil de transaction automatique prescrit (10) sont reçues par le terminal mobile (3) à partir de l'appareil de transaction automatique prescrit (10) et transmises à l'appareil de gestion de transaction (22).
